# DEMANDE DE BREVET EUROPEEN

(11) **EP 1 571 781 A1**
(43) Date de publication de la demande: **07.09.2005**
(21) Numéro de dépôt: 04290584.4
(22) Date de dépôt: 03.03.2004
(51) Int. Cl.: H04L 12/28, H04L 29/06

(54) **Procédé et système d'accréditation d'un client pour l'accès à un réseau virtuel permettant d'accéder à des services**

(71) Demandeur: FRANCE TELECOM, 75015 Paris (FR)
(72) Inventeur: Minodier, David, 22560 Pleumeur Bodou (FR); Ivanoff, Gilles, 22560 Trebeurden (FR)
(74) Mandataire: Maillet, Alain

(57) **Abrégé**

L'invention concerne un procédé et un système d'accréditation d'un client (110, 111, 112) pour l'accès à un réseau virtuel (162, 163) permettant au client d'accéder à des services fournis par des fournisseurs de services (130, 131), dans lequel on détermine la compatibilité du client avec un protocole d'authentification prédéterminé pour l'accès au réseau virtuel, si le client n'est pas compatible avec le protocole d'authentification prédéterminé, on autorise le transfert de données entre le client et au moins un système d'abonnement (140, 142) du client à au moins un fournisseur de services et si le client s'abonne à au moins un fournisseur de services, on transfère au client une accréditation pour accéder aux services du fournisseur de services auquel le client est abonné et d'informations permettant de rendre compatible le client avec le protocole d'authentification prédéterminé.

## Description

La présente invention concerne un procédé et un système d'accréditation d'un client pour l'accès à un réseau de télécommunication permettant au client d'accéder à des services fournis par des fournisseurs de services.

L'invention se situe dans le domaine de l'accréditation de clients désirant s'abonner à des services délivrés par des fournisseurs de services dans un réseau de télécommunication tel que par exemple le réseau Internet et cela par l'intermédiaire de liaisons point à point avec un multiplexeur numérique de lignes de clients. Ces liaisons sont par exemple des liaisons de type DSL. DSL est l'acronyme de « Digital Subscriber Line ». Ces liaisons peuvent aussi être des liaisons sans fil ou des liaisons par fibres optiques entre chaque client et le multiplexeur numérique de lignes de clients auxquels les clients sont reliés.

Dans les systèmes classiques d'accès à l'Internet utilisant des liaisons par exemple de type DSL, chaque client est relié à un multiplexeur numérique de lignes de clients qui est lui-même connecté à un concentrateur de sessions PPP. PPP est l'acronyme de « Point to Point Protocol », une session PPP est une session établie selon un protocole point à point. Un concentrateur de sessions PPP est classiquement appelé un BAS, acronyme de Broadband Access Server. Un concentrateur de sessions PPP achemine les sessions établies par les différents clients du réseau vers le point de présence du fournisseur de services auquel ils sont abonnés.

Lorsqu'un nouveau client désire s'abonner à des services proposés par un fournisseur de services de type DSL, un canal virtuel ATM VC est créé par un opérateur entre le modem DSL du nouveau client et le serveur BAS. Les canaux virtuels des clients abonnés au même fournisseur de services sont groupés dans des chemins virtuels ou VP entre les différents multiplexeurs numériques de lignes de clients et le concentrateur de sessions PPP.

Lorsque le client désire que son abonnement soit créé, modifié ou supprimé, il est souvent nécessaire de modifier le chemin virtuel emprunté ou devant être emprunté par le canal virtuel du client. Pour cela il est nécessaire de faire appel à des interventions humaines pour redimensionner le chemin virtuel entre le multiplexeur numérique de ligne de clients auquel est relié le client et le concentrateur de sessions PPP. Ainsi, il est souvent nécessaire de supprimer le chemin virtuel existant entre le multiplexeur numérique de ligne de clients auquel est relié le client et le concentrateur de sessions PPP pour recréer un nouveau chemin virtuel. Ceci provoque, pour tous les clients reliés au concentrateur de sessions PPP, une interruption de la fourniture des services proposés par le fournisseur de services. Une telle interruption pénalise ainsi tous les clients reliés au concentrateur de sessions PPP.

Sont connus les réseaux de type GigaEthernet qui offrent une bande passante très importante pour la transmission d'informations. Ces systèmes utilisent des protocoles d'accréditation pour l'accès à un réseau comme par exemple le protocole tel que défini dans la norme IEEE 802.1x. Ce protocole nécessite que le client qui désire se connecter au réseau dispose d'un logiciel compatible avec le protocole utilisé. Ce type de protocole d'accréditation est conçu pour les réseaux locaux d'entreprises ou des groupes de clients prédéfinis mais n'a pas été envisagé dans des réseaux de télécommunications permettant l'accès à Internet par l'intermédiaire de connexion de type DSL à une multitude clients disposant d'équipements et de logiciels variés.

L'invention a pour but de résoudre les inconvénients de l'art antérieur en proposant un procédé et un système d'accréditation d'un client pour l'accès à un réseau virtuel permettant au client d'accéder à des services fournis par des fournisseurs de services dans lequel une intervention humaine n'est pas requise au niveau du réseau de télécommunication. De plus l'invention vise à garantir aux clients que les services fournis par les fournisseurs de services auxquels ils sont abonnés ne soient pas interrompus lorsque qu'un nouveau client s'abonne ou modifie son abonnement au même fournisseur de services auquel ils sont abonnés. De plus l'invention vise à permettre à des clients disposant d'équipements et de logiciels variés de pouvoir s'abonner à un fournisseur de service de manière automatique et cela même si ceux-ci ne disposent pas de logiciels compatibles avec le logiciel d'authentification utilisé dans le réseau de télécommunication.

A cette fin, selon un premier aspect, l'invention propose un procédé d'accréditation d'un client pour l'accès à au moins un réseau virtuel permettant au client d'accéder aux services d'au moins un fournisseur de services, le ou chaque réseau virtuel étant établi sur un réseau de télécommunication, caractérisé en ce que'il comporte les étapes de détermination de la compatibilité du client avec un protocole d'authentification prédéterminé pour l'accès au réseau virtuel, d'autorisation de transfert, si le client n'est pas compatible avec le protocole d'authentification prédéterminé, de données entre le client et au moins un système d'abonnement du client à au moins un fournisseur de services par l'intermédiaire d'un réseau d'accréditation différent du ou de chaque réseau virtuel permettant à un client d'accéder aux services du ou de chaque fournisseur de services et de transfert au client, si le client s'abonne à au moins un fournisseur de services, d'une accréditation pour accéder au réseau virtuel permettant d'accéder aux services du fournisseur de services auquel le client est abonné et d'informations permettant de rendre compatible le client avec le protocole d'authentification prédéterminé.

Corrélativement, l'invention concerne un système d'accréditation d'un client pour l'accès à au moins un réseau virtuel permettant au client d'accéder aux services d'au moins un fournisseur de services, le ou chaque réseau virtuel étant établi sur un réseau de télécommunication, caractérisé en ce qu'il comporte des moyens de détermination de la compatibilité du client avec un protocole d'authentification prédéterminé pour l'accès au réseau de télécommunication, des moyens d'autorisation de transfert, si le client n'est pas compatible avec le protocole d'authentification prédéterminé, de données entre le client et au moins un système d'abonnement du client à au moins un fournisseur de services par l'intermédiaire d'un réseau différent des réseaux virtuels permettant à un client d'accéder aux services d'un fournisseur de services et des moyens de transfert au client, si le client s'abonne à au moins un fournisseur de services, d'une accréditation pour accéder au réseau virtuel permettant d'accéder aux services du fournisseur de services auquel le client est abonné et d'informations permettant de rendre compatible le client avec le protocole d'authentification prédéterminé.

Ainsi, les clients disposant d'équipements et de logiciels variés peuvent accéder à un ou plusieurs réseaux virtuels pour s'abonner à un fournisseur de service de manière automatique et cela même si ceux-ci ne disposent pas de logiciels compatibles avec le mécanisme d'authentification utilisé dans le réseau de télécommunication.

Selon un autre aspect de l'invention, le réseau d'accréditation est un réseau virtuel ou un réseau distinct du réseau de télécommunication.

Selon un autre aspect de l'invention, le système d'abonnement est constitué d'au moins un portail d'abonnement, d'un serveur de matériel d'authentification et lorsque le client s'abonne à un service, le portail d'abonnement transfère à un serveur d'authentification des données associées à l'accréditation transférée au client.

Selon un autre aspect de l'invention, le client est relié au réseau par l'intermédiaire d'un multiplexeur numérique de lignes de clients et si le client est compatible avec le protocole d'authentification prédéterminé, le multiplexeur numérique de lignes de clients obtient un identifiant et un matériel d'authentification du client ainsi qu'une confirmation de l'accréditation du client par le serveur d'authentification.

Ainsi, il est possible de vérifier si un client est autorisé ou non à accéder à un fournisseur de services et d'éviter ainsi tout accès à des services non autorisés au client.

Selon un autre aspect de l'invention, si le serveur d'authentification ne confirme pas l'accréditation du client, on autorise le transfert de données entre le client et au moins un système d'abonnement du client à au moins un fournisseur de services par l'intermédiaire d'un réseau d'accréditation différent des réseaux virtuels permettant à un client d'accéder aux services d'au moins un fournisseur de services.

Ainsi, un client ne disposant pas d'un matériel d'authentification valide peut néanmoins accéder à un système d'abonnement en vue d'obtenir un matériel d'authentification valide.

Selon un autre aspect de l'invention, des informations associées au fournisseur de services auquel le client est abonné et/ou des informations sur le ou les débits de communication auquel le client est abonné sont aussi transférées au serveur d'authentification.

Ainsi, toutes les informations nécessaires à la détermination des services auxquels le client peut accéder ainsi que le ou les débits choisis par le client lors de son abonnement sont mémorisés en un unique serveur. Il est alors possible de catégoriser les offres offertes par les fournisseurs de services et de garantir que ces offres soient respectées. De plus, lorsque des confirmations d'accréditation sont envoyées au serveur d'accréditation, celui-ci peut en même temps fournir d'autres informations nécessaires à la définition des droits du client.

Selon un autre aspect de l'invention, le multiplexeur numérique de lignes de clients autorise le transfert de données entre le réseau virtuel permettant au client d'accéder aux services du fournisseur de services auquel le client est abonné selon le ou les débits de communication auquel le client est abonné.

Ainsi, toute modification des débits de communication alloués au client est effectuée de manière automatique.

Selon un autre aspect de l'invention, au réseau virtuel d'accréditation est aussi associé un serveur d'adresses et le serveur d'adresses alloue une adresse au client pour le transfert de données sur le réseau virtuel d'accréditation.

Ainsi, le client peut obtenir une adresse dans le réseau de télécommunication lui permettant ensuite de s'abonner aux services fournis par un fournisseur de services.

Selon un autre aspect de l'invention, le réseau de télécommunication est un réseau de type Giga Ethernet © et le protocole d'authentification prédéterminé est un protocole de type IEEE 802.1x et les clients sont reliés au multiplexeur numérique de lignes de clients par l'intermédiaire de liaisons de type DSL.

L'invention concerne aussi les programmes d'ordinateurs stockés sur un support d'informations, lesdits programmes comportant des instructions permettant de mettre en oeuvre le procédé d'accréditation précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système d'accréditation d'un client pour l'accès à un réseau de télécommunication permettant au client d'accéder à des services fournis par des fournisseurs de services ;
la Fig. 2 représente un schéma bloc du multiplexeur numérique de lignes de clients de la présente invention ;
la Fig. 3 représente l'algorithme d'accréditation d'un client pour l'accès à un réseau de télécommunication permettant au client d'accéder à des services fournis par des fournisseurs de services.

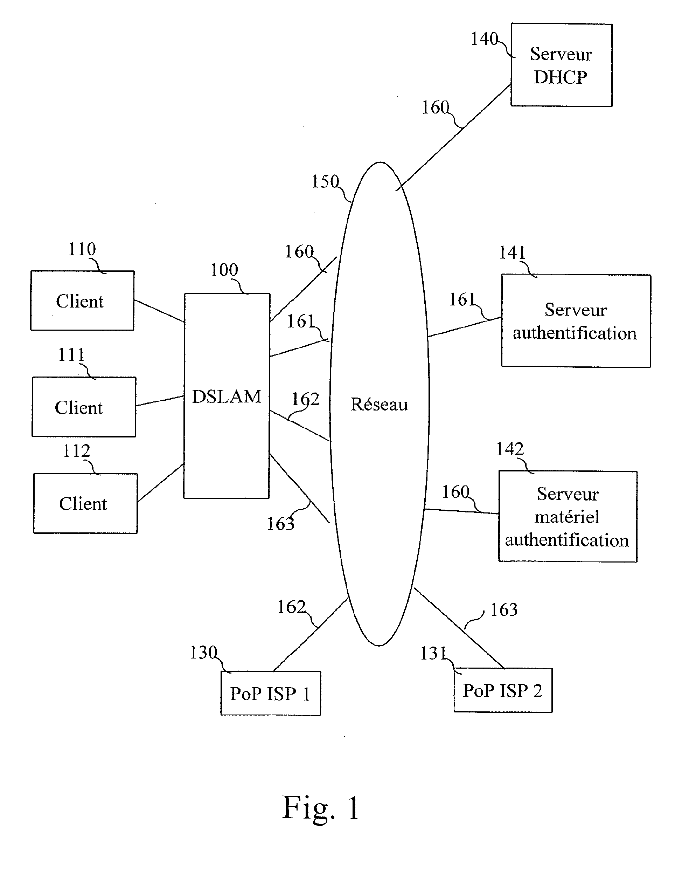

La Fig. 1 représente l'architecture du système d'accréditation d'un client pour l'accès à un réseau de télécommunication permettant au client d'accéder à des services fournis par des fournisseurs de services.

Le système d'accréditation d'un client à un réseau de télécommunication comprend un multiplexeur numérique de lignes de clients 100. Le multiplexeur numérique de lignes de clients 100 est dans un mode préféré un multiplexeur numérique de lignes de clients adapté à des liaisons point à point avec des clients 110 111 et 112. Lorsque les liaisons sont de type DSL, le multiplexeur numérique de lignes de clients 100 est connu sous le terme DSLAM. DSLAM est l'acronyme de « Digital Subscriber Line Access Multiplexor ».

Le multiplexeur numérique de lignes de clients 100 a pour fonction de regrouper plusieurs lignes de clients 110, 111 et 112 sur un support physique qui assure le transport des données échangées entre les clients 110, 111 et 112 et des fournisseurs de services 130 et 131. Un client est par exemple un dispositif de télécommunication tel qu'un ordinateur comprenant une carte de communication adaptée à la liaison existant avec le multiplexeur numérique de lignes de clients 100 ou un ordinateur relié à un dispositif de communication externe adaptée à la liaison existant avec le multiplexeur numérique de lignes de clients 100.

Les clients 110, 111 et 112 sont plus précisément des terminaux de télécommunication et sont reliés au multiplexeur numérique de lignes de clients 100 par l'intermédiaire du réseau téléphonique filaire et utilisent les techniques de modulation de type DSL. Bien entendu d'autres types de liaisons point à point peuvent être utilisées. Par exemple et de manière non limitative, ces liaisons peuvent être aussi des liaisons sans fils ou des liaisons par fibres optiques. Le multiplexeur numérique de lignes de clients 100 autorise l'accès aux services proposés par les fournisseurs de services 130 et 131 par exemple aux clients 111 et 112 si ceux-ci sont compatibles avec un protocole d'authentification tel que par exemple le protocole IEEE 802.1x et si l'enregistrement de ceux-ci a été validé par un serveur d'authentification 141 associé à leur fournisseur de services 130 ou 131. Pour cela, le multiplexeur numérique de lignes de clients 100 comprend un module logiciel client qui émet des requêtes d'authentification à un serveur 141 lorsqu'un client 110, 111 ou 112 désire accéder aux services proposés par un fournisseur de services relié au réseau 150. Le module logiciel client est préférentiellement un module logiciel client RADIUS c'est-à-dire conforme au protocole RADIUS et le serveur 141 est préférentiellement un serveur d'authentification de type RADIUS lui aussi conforme au protocole RADIUS. RADIUS est l'acronyme de « Remote Authentification Dial In User Service ». Il est à remarquer ici que d'autres types de protocole d'authentification peuvent être utilisés dans la présente invention. Ces protocoles sont par exemple et de manière non limitative de type « Diameter »© ou de type « TACACS » acronyme de « Terminal Access Controller Access Control System » ou protocole d'authentification utilisant un serveur d'authentification.

Le multiplexeur numérique de lignes de clients 100 autorise, à un client tel que le client 110, l'accès à un système d'abonnement à un fournisseur de services 130 ou 131 lorsque que le client 110 ne dispose pas d'un logiciel compatible avec le protocole d'authentification tel que par exemple le protocole IEEE 802.1x. Le multiplexeur numérique de lignes de clients 100, lorsqu'un client n'est pas compatible avec le protocole d'authentification et lorsque l'enregistrement du client a été validé par le serveur d'authentification 141 associé à un fournisseur de services 130 ou 131, transfère à ce client les données lui permettant de se rendre compatible avec le protocole d'authentification.

Dans le protocole IEEE 802.1x, trois éléments composent l'architecture d'authentification. Le « supplicant » est l'élément qui tente d'accéder au réseau en y demandant un accès. « L'authenticator » est l'élément qui assure le relais des informations liées à l'authentification du « supplicant » vers le contrôleur d'identification ou « authentication server ». Le contrôleur d'identification est l'élément qui valide l'accès du « supplicant » au réseau. Les informations sont échangées entre « l'authenticator » et « l'authentication server » conformément au protocole EAP, acronyme de « Extensible Authentication Protocol » ou protocole d'authentification extensible. Les informations échangées entre le « supplicant » et « l'authenticator » sont conformes au protocole EAPOL, acronyme de « EAP Over Lan ». Le « supplicant » est par exemple le client 111, « l'authenticator » est le multiplexeur numérique de lignes de clients 100 et « l'authentication server » est le serveur d'authentification RADIUS 141 de la Fig. 1

Le multiplexeur numérique de lignes de clients 100 est relié aux fournisseurs de services 130 et 131 par l'intermédiaire de points de présence PoP non représentés en Fig. 1. Les fournisseurs de services 130 et 131 offrent différents services à leurs abonnés respectifs. Ces services sont par exemple et de manière non limitative des services d'accès à Internet, etc, des services de vidéo à la demande, des services de courrier électronique, des services de téléphonie sur le réseau Internet, des services de visioconférence sur Internet. Le multiplexeur numérique de lignes de clients 100 est aussi relié à un serveur DHCP 140, à un serveur d'authentification RADIUS 141 et à un serveur de matériel d'authentification 142 par l'intermédiaire d'un réseau de télécommunication 150. Le réseau de télécommunication 150 est par exemple un réseau de type GigaEthernet. Des réseaux virtuels sont établis sur le réseau de télécommunication 150 entre le multiplexeur numérique de lignes de clients 100 et chaque fournisseur de services 130 et 131. Un réseau, distinct des réseaux virtuels précédemment mentionnés est aussi établi pour l'accès au système d'abonnement à un fournisseur de services par un client qui n'est pas compatible avec le protocole IEEE 802.1x. Le réseau établi dans le réseau de télécommunication 150 pour l'accès au système d'abonnement à un fournisseur de services par un client qui n'est pas compatible avec le protocole IEEE 802.1x est un réseau physique distinct du réseau de télécommunication 150 ou un réseau virtuel établi sur le réseau de télécommunication 150. Les réseaux virtuels ou VLAN, acronyme de « Virtual Local Area Network » permettent de catégoriser les clients et ainsi de limiter les ressources auxquelles ils ont accès. Par exemple, si le client 111 est client du fournisseur de services 130, les échanges entre le client 111 et le fournisseur de services 130 sont effectués par l'intermédiaire du VLAN symbolisé par les liaisons notées 162 en Fig. 1. Le client 111 par contre ne peut accéder aux services proposés par le fournisseur de services 131 car celui-ci est associé à un autre VLAN noté 163 différent du VLAN 162.

Le serveur DHCP 140 distribue des adresses IP aux clients, par exemple au client 110 lorsqu'il souhaite s'abonner aux services proposés par un des fournisseurs de services 130 ou 131. DHCP est l'acronyme de « Dynamic Host Configuration Protocol ». Il est à remarquer ici que le serveur DHCP peut en variante distribuer des adresses de type IPv6 lorsque ce protocole est utilisé.

Le serveur d'authentification 141 est le serveur d'authentification ou « authentication server » selon le protocole IEEE 802.1x et est dans un mode préféré de réalisation conforme au protocole RADIUS. Le serveur d'authentification RADIUS 141 authentifie un client, par exemple le client 111 auprès du multiplexeur numérique de lignes de clients 100 lorsque le client 111 désire accéder au fournisseur de services 130. Cette authentification est effectuée à partir de l'identifiant du client tel que son nom d'utilisateur et la fourniture par le client d'un mot de passe ou d'un matériel d'authentification authentifié par le serveur d'authentification 141. A la réception de cette confirmation, le multiplexeur numérique de lignes de clients 100 autorise le transfert de données entre le client 111 et le fournisseur de services 130 par l'intermédiaire du réseau virtuel 162 si le client 111 s'est préalablement abonné aux services proposés par le fournisseur de services 130. De la même façon, le serveur d'authentification RADIUS 141 authentifie le client 112 auprès du multiplexeur numérique de lignes de clients 100 lorsque le client 112 désire accéder au fournisseur de services 131. A la réception de cette confirmation, le multiplexeur numérique de lignes de clients 100 autorise le transfert de données entre le client 112 et le fournisseur de services 131 par l'intermédiaire du réseau virtuel 163 si le client 112 s'est préalablement abonné aux services proposés par le fournisseur de services 131.

Un réseau virtuel noté 161 est aussi dédié au transport des données d'authentification entre le multiplexeur numérique de lignes de clients 100 et le serveur d'authentification RADIUS 141.

Le serveur d'authentification RADIUS 141 comporte aussi les attributs associés aux clients reliés au multiplexeur numérique de lignes de clients 100. Ces attributs sont par exemple, le ou les réseaux virtuels auxquels le client 110, 111 ou 112 a le droit d'accéder ainsi que d'autres informations telles que par exemple le débit de transfert de données souscrit par le client ou le ou les fournisseurs de services auxquels le client est abonné, le type d'applications hébergées par le client, etc. Au serveur d'authentification RADIUS 141 est associée une base de données clients qui mémorise tous les clients pouvant accéder aux services proposés par les différents fournisseurs de services 130 et 131 reliés au réseau 150, les attributs constituant le profil d'un client 110, 111 ou 112, ainsi qu'un identifiant de chaque client 110, 111 ou 112. A cet identifiant est associé un mot de passe ou un matériel d'authentification délivré par un serveur de matériel d'authentification 142.

Dans un mode particulier de réalisation, le serveur de matériel d'authentification 142 assure en outre la fonction de portail d'abonnement et lorsqu'un client accède à ce portail, le client 110 peut s'abonner à un service proposé par un des fournisseurs de services 130 ou 131 associés au réseau.

Lorsqu'un client, par exemple le client 110, ne dispose pas d'un logiciel compatible avec le protocole d'authentification tel que par exemple le protocole IEEE 802.1x, celui-ci est autorisé à accéder au réseau d'accréditation 160. Le réseau d'accréditation 160 est par exemple un réseau virtuel 160. Au réseau virtuel 160 sont reliés un serveur DHCP 140 et un serveur de matériel d'authentification 142. Par l'intermédiaire du serveur DHCP 140, le client 110 qui ne dispose pas de logiciel compatible avec le protocole IEEE 802.x obtient une adresse et peut ainsi établir une communication avec le serveur de matériel d'authentification 142 et s'abonner aux services proposés par un ou plusieurs fournisseurs de services 130 et/ou 131.

Il est à remarquer ici que le serveur d'authentification RADIUS 141, accessible par l'intermédiaire du réseau virtuel 161, peut aussi être en variante un proxy serveur d'authentification RADIUS qui redirige les informations transférées vers des serveurs d'authentification RADIUS non représentés en Fig. 1 associés à chaque fournisseur de services 130 et 131. Selon cette variante, chaque serveur d'authentification Radius associé à chaque fournisseur 130 et 131 de services mémorise tous les clients pouvant accéder aux services proposés par le fournisseur de services auquel il est associé ainsi que les attributs constituant le profil d'un client, l'identifiant de chaque client et le mot de passe ou le matériel d'authentification délivré par le serveur de matériel d'authentification 142.

Il est à remarquer aussi que le serveur DHCP 140 accessible par l'intermédiaire du réseau virtuel 161 peut aussi être en variante un serveur relais ou « proxy » DHCP qui redirige les informations transférées vers des serveurs DHCP (non représentés en Fig. 1) associés à chaque fournisseur de services 130 et 131.

Un proxy est un équipement qui reçoit des informations d'un premier dispositif de télécommunication et transfère celles-ci vers un second dispositif de télécommunication, et réciproquement qui reçoit des informations du second dispositif de télécommunication et transfère celles-ci vers le premier dispositif de télécommunication.

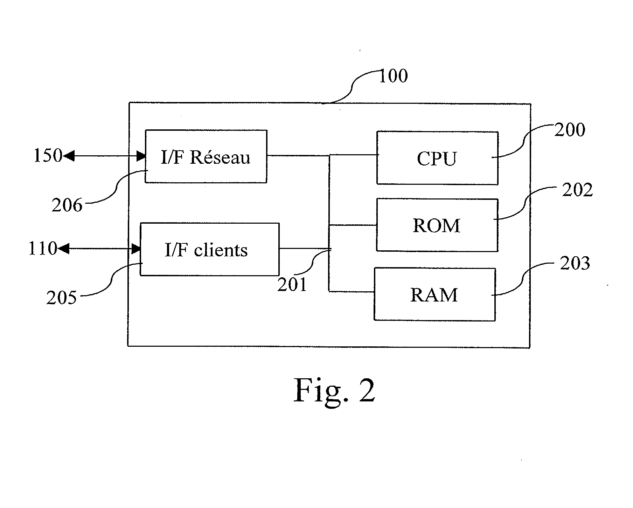

La Fig. 2 représente un schéma bloc du multiplexeur numérique de lignes de clients de la présente invention.

Le multiplexeur numérique de lignes de clients 100 comporte un bus de communication 201 auquel sont reliées une unité centrale 200, une mémoire non volatile 202, une mémoire vive 203, une interface clients 205 et une interface réseau 206.

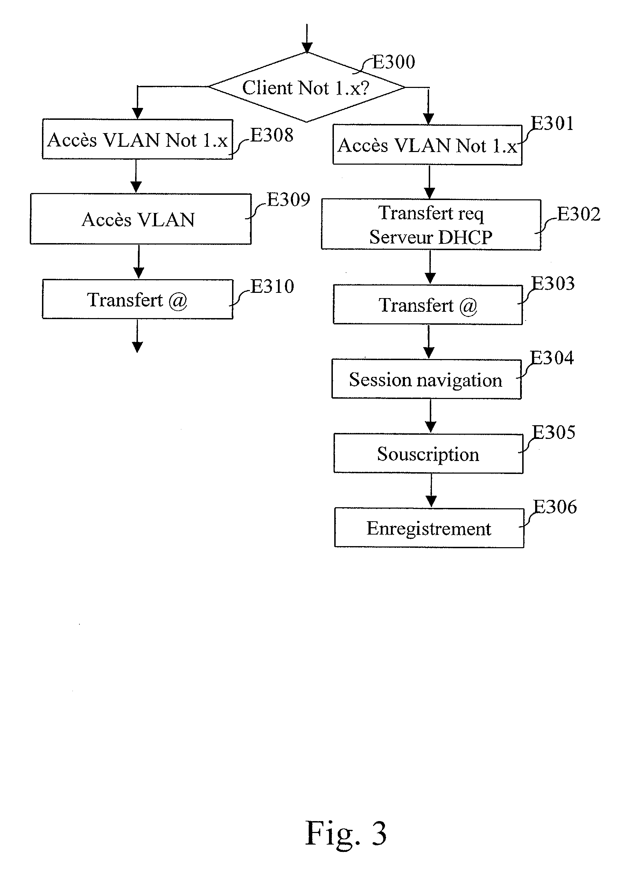

La mémoire non volatile 202 mémorise les programmes mettant en oeuvre l'invention tel que le module logiciel RADIUS client et au moins une partie de l'algorithme qui sera décrit ultérieurement en référence à la Fig. 3. La mémoire non volatile 302 est par exemple un disque dur. De manière plus générale, les programmes selon la présente invention sont mémorisés dans un moyen de stockage. Ce moyen de stockage est lisible par un ordinateur ou un microprocesseur 200. Ce moyen de stockage est intégré ou non au multiplexeur numérique de lignes de clients 100, et peut être amovible. Lors de la mise sous tension du multiplexeur numérique de lignes de clients 100, les programmes sont transférés dans la mémoire vive 203 qui contient alors le code exécutable de l'invention ainsi que les données nécessaires à la mise en oeuvre de l'invention.

Le multiplexeur numérique de lignes de clients 100 comporte aussi une interface réseau de télécommunication 206. Cette interface permet les transferts de données entre les fournisseurs de services 130 et 131 et/ou le serveur DHCP 140 et/ou le serveur d'authentification RADIUS 141 et/ou le serveur de matériel d'authentification 142.

Le multiplexeur numérique de lignes de clients 100 comporte aussi une interface clients 205. Cette interface est dans un mode préféré de réalisation une interface de type DSL. L'interface clients 205 comporte pour chaque client 110, 111 et 112 un port dédié aux communications point à point entre le multiplexeur numérique de lignes de clients 100 et le client connecté à ce port.

Le processeur 200 est apte à autoriser ou non le transfert de données entre l'interface réseau de télécommunication 206 et chaque port de l'interface clients 205 relié à un client en fonction de l'accréditation du client.

Selon le mode préféré de réalisation la liaison entre le multiplexeur numérique de lignes de clients 100 et chaque client 110, 111 et 112 est une liaison filaire utilisant la ligne téléphonique respective des clients 110, 111, 112. Bien entendu, d'autres liaisons telles que des liaisons de type coaxiales, radio ou par fibres optiques peuvent être aussi utilisées en variante.

La Fig. 3 représente l'algorithme d'accréditation d'un client pour l'accès à un réseau de télécommunication permettant au client d'accéder à des services fournis par des fournisseurs de services.

A l'étape E300, le processeur 200 du multiplexeur numérique de lignes de clients 100 détecte une demande de connexion d'un client au réseau de télécommunication permettant au client d'accéder à des services fournis par des fournisseurs de services. A cette étape le processeur 200 vérifie si le client est compatible avec le protocole d'authentification tel que par exemple le protocole IEEE 802.1x. Ceci est par exemple déterminé en vérifiant si les informations transmises par le client 110 sont conformes au protocole EAPOL. Dans l'affirmative, le processeur 200 passe à l'étape E308. Dans la négative, le processeur 200 passe à l'étape E301.

A l'étape E301, le processeur 200 ayant déterminé que le client n'est pas compatible avec le protocole IEEE 802.1x considère celui-ci comme un nouveau client et autorise le nouveau client, par exemple le client 110 à accéder à un réseau virtuel prédéterminé. A ce réseau virtuel ou VLAN noté 160 en Fig. 1, est relié un système d'abonnement. Ce système d'abonnement comprend un serveur DHCP 140 ainsi qu'un serveur de matériel d'authentification 142. Le client 110 peut alors établir des communications avec le serveur DHCP 140 ainsi que le serveur de matériel d'authentification 142. Ce réseau virtuel 160 est dédié aux clients qui ne disposent pas de la fonctionnalité 802.1x.

Cette opération effectuée, le client 110 demande à l'étape E302 une adresse telle que par exemple une adresse IP au serveur DHCP 140 par l'intermédiaire du multiplexeur numérique de lignes de clients 100 et du réseau virtuel 160.

Cette adresse IP est transférée au client 110 à l'étape E303.

A la réception de cette adresse IP, le client 110 lance à l'étape E304 une session de navigation à l'aide d'un navigateur du terminal de télécommunication et une connexion est établie avec un portail d'abonnement. Le portail d'abonnement est préférablement intégré au serveur de matériel d'authentification 142. Bien entendu, le portail d'abonnement peut être distinct du serveur de matériel d'authentification 142 mais doit dans ce cas être lui-aussi relié au réseau virtuel 160. Lorsque chaque fournisseur de services 130 ou 131 dispose d'un portail d'abonnement, chaque portail d'abonnement doit alors être relié au réseau virtuel 160.

A l'étape E305, le client 110 souscrit à un service proposé par un des fournisseurs de services 130 ou 131. Le client 110 sélectionne le fournisseur de services ainsi que le débit qu'il souhaite avoir. De manière générale, le client 110 choisit parmi un ensemble de services proposés par le fournisseur de services sélectionné, le ou les services dont il souhaite disposer.

A l'étape suivante E306, un enregistrement du client 110 est effectué. Cet enregistrement consiste en une mise à jour de la base de données client comprise dans le serveur d'authentification RADIUS 141 par le serveur de matériel d'authentification 142 comprenant le portail d'abonnement. Sont alors mémorisés un identifiant du client 110 associé à un mot de passe ou à un matériel d'authentification tel qu'un certificat, le fournisseur de services auquel le client 110 a souscrit ainsi que le ou les réseaux virtuels comprenant le fournisseur de services. Si par exemple le client 110 a souscrit un abonnement au fournisseur de services 130, celui-ci sera alors autorisé à accéder au réseau virtuel 162 comme tous les clients du fournisseur de services 130. A cette étape, sont aussi transférés au client 110 un identifiant et un mot de passe ou un matériel d'authentification ainsi que les informations permettant de rendre le client 110 compatible avec le protocole 802.1x. Ces informations sont par exemple une commande pour l'activation du logiciel 802.1x « supplicant » lorsque celui-ci est déjà présent dans le dispositif de communication du client 110 ou un message visuel et/ou sonore d'invitation du client 110 à activer le logiciel 802.1x ou le déchargement du logiciel 802.1x « supplicant » ainsi que son installation dans le dispositif de communication du client 110.

Cette opération effectuée, le processeur 200 retourne à l'étape E300. Le processeur 200 détecte une nouvelle demande de connexion du client 110 au réseau de télécommunication permettant au client d'accéder à des services fournis par des fournisseurs de services.

A cette étape le processeur 200 vérifie si le client est compatible avec le protocole d'authentification tel que par exemple le protocole IEEE 802.1x. Le client 110 étant devenu compatible à l'étape E306 précédente, le processeur 200 passe à l'étape E308.

A cette étape, une vérification de l'accréditation du client est effectuée. Pour cela le multiplexeur numérique de lignes de clients 100 reçoit du dispositif de communication du client 110 un identifiant et un mot de passe ou un matériel d'authentification.

Le processeur 200 du multiplexeur numérique de lignes de clients 100 commande le transfert d'une requête de confirmation d'enregistrement à destination du serveur d'authentification RADIUS 141 par l'intermédiaire du réseau virtuel 161. Le serveur d'authentification RADIUS 141 recherche dans la base de données des clients si le client 110 est compris dans la base de données des clients et transfère dans l'affirmative au multiplexeur numérique de lignes de clients 100 une confirmation de l'enregistrement du client 110 ainsi que des informations telles que le réseau virtuel auquel l'accès du client 110 est autorisé, le débit devant être alloué au client 110 ainsi que le profil associé au client 110.

A l'étape suivante E309, le processeur 200 du multiplexeur numérique de lignes de clients 100 autorise l'accès au réseau virtuel auquel l'accès du client 110 est autorisé et cela au débit devant être alloué à celui-ci. Il est à remarquer ici que si l'enregistrement du client 110 n'est pas confirmé, le processeur 200 du multiplexeur numérique de lignes de clients 100 autorise le transfert de données entre le client 110 et au moins un système d'abonnement du client à au moins un fournisseur de services par l'intermédiaire du réseau d'accréditation 160.

A l'étape suivante E310, si le client 110 ne dispose pas d'une adresse IP allouée préalablement par le fournisseur de services auquel il est abonné, une adresse IP permettant au client 110 d'accéder au service souscrit est allouée par un serveur DHCP associé au fournisseur de services auquel a souscrit le client 110.

Le client 110 peut ainsi accéder à des services fournis par le fournisseur de services 130 ou 131 auquel il est abonné.

Bien entendu, la présente invention n'est nullement limitée aux modes de réalisation décrits ici, mais englobe, bien au contraire, toute variante à la portée de l'homme du métier.

## Revendications

1. Procédé d'accréditation d'un client (110, 111, 112) pour l'accès à au moins un réseau virtuel (162, 163) permettant au client d'accéder aux services d'au moins un fournisseur de services (130, 131), le ou chaque réseau virtuel étant établi sur un réseau de télécommunication (150), **caractérisé en ce que** le procédé comporte les étapes de :
- détermination de la compatibilité (E300) du client avec un protocole d'authentification prédéterminé pour l'accès au réseau virtuel,
- si le client n'est pas compatible avec le protocole d'authentification prédéterminé, autorisation (E301) de transfert de données entre le client et au moins un système d'abonnement (140, 142) du client à au moins un fournisseur de services par l'intermédiaire d'un réseau d'accréditation (160) différent du ou de chaque réseau virtuel (162, 163) permettant à un client d'accéder aux services du ou de chaque fournisseur de services,
- si le client s'abonne à au moins un fournisseur de services, transfert (E306) au client d'une accréditation pour accéder au réseau virtuel permettant d'accéder aux services du fournisseur de services auquel le client est abonné et d'informations permettant de rendre compatible le client avec le protocole d'authentification prédéterminé.

2. Procédé selon la revendication 1, **caractérisé en ce que** le réseau d'accréditation est un réseau virtuel ou un réseau distinct du réseau de télécommunication.

3. Procédé selon la revendication 1 ou 2, **caractérisé en ce que** le système d'abonnement est constitué d'au moins un portail d'abonnement (140), d'un serveur de matériel d'authentification (140) et lorsque le client s'abonne à un service, le portail d'abonnement transfère à un serveur d'authentification (141) des données associées à l'accréditation transférée au client.

4. Procédé selon la revendication 3, **caractérisé en ce que** le client est relié au réseau par l'intermédiaire d'un multiplexeur numérique de lignes de clients et si le client est compatible avec le protocole d'authentification prédéterminé, le multiplexeur numérique de lignes de clients effectue les étapes d'obtention d'un identifiant et d'un matériel d'authentification du client et d'obtention d'une confirmation de l'accréditation du client par le serveur d'authentification.

5. Procédé selon la revendication 4, **caractérisé en ce que** si le serveur d'authentification ne confirme pas l'accréditation du client, le procédé comporte une étape d'autorisation de transfert de données entre le client et au moins un système d'abonnement du client à au moins un fournisseur de services par l'intermédiaire d'un réseau d'accréditation différent des réseaux virtuels permettant à un client d'accéder aux services d'au moins un fournisseur de services.

6. Procédé selon la revendication 3 ou 4, **caractérisé en ce que** des informations associées au fournisseur de services auquel le client est abonné et/ou des informations sur le ou les débits de communication auquel le client est abonné sont aussi transférées au serveur d'authentification.

7. Procédé selon la revendication 6, **caractérisé en ce que** le serveur d'accréditation transfère en outre au multiplexeur numérique de lignes de clients les informations associées au fournisseur de services auquel le client est client et/ou les informations sur le ou les débits de communication auquel le client est abonné.

8. Procédé selon la revendication 7, **caractérisé en ce que** le multiplexeur numérique de lignes de clients autorise le transfert de données entre le réseau virtuel permettant au client d'accéder aux services du fournisseur de services auquel le client est abonné selon le ou les débits de communication auquel le client est abonné.

9. Procédé selon l'une quelconque des revendications 1 à 8, **caractérisé en ce qu'**au réseau virtuel d'accréditation est aussi associé un serveur d'adresses et **en ce que** le serveur d'adresses alloue une adresse au client pour le transfert de données sur le réseau virtuel d'accréditation.

10. Procédé selon l'une quelconque des revendications 1 à 9, **caractérisé en ce que** le réseau de télécommunication est un réseau de type Giga Ethernet et **en ce que** le protocole d'authentification prédéterminé est un protocole de type IEEE 802.1x et **en ce que** les clients sont reliés au multiplexeur numérique de lignes de clients par l'intermédiaire de liaisons de type DSL.

11. Système d'accréditation d'un client pour l'accès à au moins un réseau virtuel permettant au client d'accéder aux services d'au moins un fournisseur de services, le ou chaque réseau virtuel étant établi sur un réseau de télécommunication, **caractérisé en ce que** le système comporte:
- des moyens de détermination de la compatibilité du client avec un protocole d'authentification prédéterminé pour l'accès au réseau de télécommunication,
- des moyens d'autorisation de transfert, si le client n'est pas compatible avec le protocole d'authentification prédéterminé, de données entre le client et au moins un système d'abonnement du client à au moins un fournisseur de services par l'intermédiaire d'un réseau différent des réseaux virtuels permettant à un client d'accéder aux services d'un fournisseur de services,
- des moyens de transfert au client, si le client s'abonne à au moins un fournisseur de services, d'une accréditation pour accéder au réseau virtuel permettant d'accéder aux services du fournisseur de services auquel le client est abonné et d'informations permettant de rendre compatible le client avec le protocole d'authentification prédéterminé.

12. Programme d'ordinateur stocké sur un support d'informations, ledit programme comportant des instructions permettant de mettre en oeuvre le procédé d'accréditation selon l'une quelconque des revendications 1 à 10, lorsqu'il est chargé et exécuté par un système informatique.
